Europäisches Patentamt

European Patent Office

Office européen des brevets

(19)

(11) **EP 0 500 481 B1**

(12) **FASCICULE DE BREVET EUROPEEN**

(45) Date de publication et mention
de la délivrance du brevet:
**29.04.1998 Bulletin 1998/18**

(51) Int Cl.⁶: **G06F 7/22**

(21) Numéro de dépôt: **92420054.6**

(22) Date de dépôt: **19.02.1992**

(54) **Circuit et procédé de sélection des k plus grandes données d'une suite de données**

Schaltung und Verfahren zur Auswahl der k-grössten Daten einer Datenfolge

Circuit and method for selecting the k largest data of a sequence of data

(84) Etats contractants désignés:
**DE FR GB IT**

(30) Priorité: **21.02.1991 FR 9102301**

(43) Date de publication de la demande:
**26.08.1992 Bulletin 1992/35**

(73) Titulaire: **SGS-THOMSON MICROELECTRONICS
S.A.
94250 Gentilly (FR)**

(72) Inventeur: **Artieri, Alain
F-38240 Meylan (FR)**

(74) Mandataire: **de Beaumont, Michel
1bis, rue Champollion
38000 Grenoble (FR)**

(56) Documents cités:
**EP-A- 0 273 802        US-A- 4 317 182**

- **PATENT ABSTRACTS OF JAPAN vol. 015, no.
  121 (E-1049)25 Mars 1991 & JP-A-03 010 486**
- **DIGITAL PROCESSES. vol. 6, no. 2-3, 1980,
  ST-SAPHORIN CH pages 207 - 210; YUEN: 'A
  Bit-serial Device for Extracting a Vector Element
  of a Specified Rank'**

**Description**

La présente invention concerne les circuits de tri de données selon un critère déterminé et en particulier un circuit permettant de sélectionner les k plus grandes données d'une suite de données arrivant séquentiellenent.

Ces circuits de tri sont par exemple utiles dans le cadre de la compression d'image. En effet, dans ce cadre, on cherche à transmettre un minimum de données représentant le mieux possible une image. On cherche en particulier à annuler des données selon un critère déterminé pour augmenter l'efficacité de compression en diminuant la complexité et le temps des traitements qui augmentent avec le nombre de données non nulles.

Dans les systèmes de compression d'image, on décompose les images en blocs, de par exemple 8x8 pixels, auxquels on associe des matrices dont chaque coefficient représente les informations de luminance et de chrominance d'un pixel. Ces matrices subissent, par exemple, une transformée cosinus discrète (DCT) à la suite de quoi on obtient des matrices transformées de même dimension qui présentent l'avantage d'avoir beaucoup de coefficients pratiquement nuls.

On a constaté qu'en annulant un certain nombre des petits coefficients de la matrice transformée puis en lui faisant subir la transformée cosinus inverse, on pouvait reconstituer une image sans dégradation significative.

Une première technique de l'art antérieur pour fournir les plus grands coefficients de la matrice transformée consiste à lire séquentiellement les coefficients et à les comparer à une valeur de seuil pour annuler ceux qui sont inférieurs au seuil. Cette technique présente l'inconvénient d'annuler tous les coefficients d'une matrice s'ils sont tous petits ; il en résulte une dégradation non négligeable de l'image reconstituée car les plus grands de ces petits coefficients correspondent à des informations significatives. Elle présente aussi l'inconvénient de n'annuler aucun des coefficients s'ils sont tous supérieurs au seuil et l'objectif de compression n'est alors pas atteint.

Une deuxième technique consiste à ne garder qu'un nombre déterminé k des données les plus grandes. Ainsi, on est sûr de ne pas annuler des valeurs petites qui sont quand même représentatives de l'image et de ne pas avoir à traiter plus de k données dans une étape ultérieure. Jusqu'à présent les circuits de mise en oeuvre de cette deuxième technique présentent l'inconvénient d'être complexes et relativement lents.

La présente invention prévoit un procédé mettant en oeuvre cette deuxième technique d'une façon particulièrement simple.

Pour cela, la présente invention prévoit un procédé de sélection des k données de plus grande valeur dans une suite de n données arrivant séquentiellement sous forme de signaux logiques binaires, comprenant les étapes suivantes : a) écrire séquentiellement chacune des données dans l'une de n mémoires adaptées à recevoir chacune un mot comprenant dans l'ordre des poids de bit décroissant : un premier bit d'inhibiton, un deuxième bit de sélection, des troisièmes bits de la donnée, des quatrièmes bits correspondant à un nombre représentatif du rang d'arrivée de la donnée ; b) mettre à 1 les premiers bits des n mots lors de l'arrivée du premier des signaux correspondant à la suite de données ; c) lors de l'écriture de chacune des données, mettre à zéro les premier et deuxième bits du mot correspondant ; d) entre les arrivées des signaux correspondant à la $(n-k)^{ème}$ donnée et à le $n^{ème}$ donnée, détecter le plus petit des mots contenus dans les mémoires et mettre à 1 son deuxième bit ; et e) dès l'arrivée des signaux correspondant à la $n^{ème}$ donnée, lire séquentiellement les données mémorisées et traiter différement celles dont le mot présente le deuxième bit à 1 et celles dont ce bit est à 0.

Selon un mode de réalisation de la présente invention, à l'étape e) les données sont lues selon l'ordre de leur écriture à l'étape a).

La présente invention prévoit aussi un circuit de sélection des k données de plus grande valeur dans une suite de n données présentées séquentiellement sur un bus d'entrée sous forme de signaux logiques binaires, comprenant : une matrice de points mémoire de n colonnes et m rangées, chaque colonne étant affectée à un mot correspondant à l'une des données et comprenant dans l'ordre des numéros de rangée croissants et des poids de bit décroissants : un premier point mémoire d'inhibition mis à un par un signal d'initialisation et mis à zéro par l'arrivée de la donnée, un deuxième point mémoire de sélection relié à une ligne d'un bus de sortie, mis à zéro par l'arrivée de la donnée, des troisièmes points mémoire reliés aux lignes du bus d'entrée de données et d'un bus de sortie de données, pour recevoir et stocker la donnée, et des quatrièmes points mémoire contenant un nombre représentatif du rang d'arrivée de la donnée ; un premier circuit pour adresser chacune des colonnes au rythme d'arrivée des données et y écrire la donnée présente sur les lignes du bus d'entrée ; un deuxième circuit actif seulement entre l'arrivée de la $(n-k)^{ème}$ donnée et l'arrivée de la $n^{ème}$ donnée pour détecter le mot de plus petite valeur et mettre son deuxième point mémoire à 1 dès l'arrivée de la donnée suivante ; et un troisième circuit pour adresser chacune des colonnes au rythme d'arrivée des données et écrire les bits contenus dans les deuxième et troisièmes points mémoire sur les lignes du bus de sortie de données dès l'écriture de la $n^{ème}$ donnée.

Selon un mode de réalisation de la présente invention, le deuxième circuit est constitué de modules, chacun étant associé à un point mémoire et comprenant : une liaison à la sortie Q du point mémoire associé, une sortie d'exclusion $X_{ij}$, qui, si la rangée courante i est la dernière, est reliée à une entrée de mise à 1 du deuxième point mémoire de la colonne courante j, une sortie intermédiaire, une entrée d'exclusion reliée, ou bien à la sortie d'exclusion $X_{i-1,j}$ du module de la colonne courante j et de la rangée précédente i-1, ou bien à 0 si la rangée courante est la première, une entrée de détection reliée à la sortie $Z_i$ d'un moyen logique de détection commun à tous les modules de la rangée courante j et recevant en entrée les sorties intermédiaires de ces modules ; la sortie $X_{ij}$ prenant les valeurs résumées dans le tableau suivant où le symbole "#" désigne indifféremment 0 ou 1 :

| $Z_i$ | $X_{i-1,j}$ | $X_{ij}$ |
|---|---|---|
| # | 1 | 1 |
| 0 | 0 | 0 |
| 1 | 0 | Q |

la sortie intermédiaire prenant la valeur 1 si la sortie $X_{i-1,j}$ est à 1 et/ou si la sortie Q est à 1.

Selon un mode de réalisation de la présente invention, le moyen logique de détection fournit la valeur 0 à sa sortie $Z_i$ seulement quand toutes les sorties intermédiaires des modules de la rangée courante j sont à 1.

Selon un mode de réalisation de la présente invention, les circuits pour adresser chacune des colonnes sont constitués d'un registre à décalage.

Selon un mode de réalisation de la présente invention, les deuxièmes points mémoire sont autorisés à être mis à 1 par un signal de validation actif entre les arrivées de la $(n-k)^{ième}$ donnée et de la $n^{ième}$ donnée.

Un avantage de la présente invention est que la sélection des k plus grandes données est terminée dès l'arrivée de la dernière donnée de la suite, alors que dans l'art antérieur on était obligé de trier et ranger les données par ordre décroissant dans une mémoire et de prendre ensuite les k premières.

Ces objets, caractéristiques et avantages ainsi que d'autres de la présente invention seront exposés plus en détail dans la description suivante de modes de réalisation particuliers faite en relation avec les figures jointes parmi lesquelles :

les figures 1A à 1P illustrent des étapes successives du procédé selon la présente invention dans un cas concret ;
la figure 2 représente un schéma simplifié modulaire d'un mode de réalisation d'un circuit de sélection selon la présente invention ;
la figure 3 représente un schéma électrique d'un des modules de la figure 2 ;
la figure 4 représente le chronogramme des cycles de fonctionnement des circuits des figures 2 et 3 ; et
la figure 5 représente une modification d'un des modules et du circuit de la figure 2 pour pallier un éventuel inconvénient.

Pour simplifier la compréhension, on va décrire le procédé selon l'invention à l'aide d'un exemple concret. Considérons la suite de 8 données suivantes :

$D_1 = 1$
$D_2 = 5$
$D_3 = 7$
$D_4 = 8$
$D_5 = 5$
$D_6 = 4$
$D_7 = 8$
$D_8 = 2$

et supposons qu'on veuille sélectionner les k=4 données plus grandes. Il y a deux solutions : ($D_4$, $D_7$, $D_3$, $D_2$) ou ($D_4$, $D_7$, $D_3$, $D_5$) ; il faut donc supprimer l'une des données $D_2$ ou $D_5$. On choisit ici de garder la donnée d'indice le plus petit, ici $D_2$. Pour cela, on forme de nouvelles données $D'_1$ à $D'_8$ à partir des données $D_1$ à $D_8$ auxquelles on juxtapose à droite un coefficient de priorité n-j où n désigne le nombre de données de la suite (ici n=8) et j le rang d'arrivée de la donnée considérée. La suite de données modifiée est alors :

$D'_1 = 17$
$D'_2 = 56$
$D'_3 = 75$
$D'_4 = 84$
$D'_5 = 53$
$D'_6 = 42$
$D'_7 = 81$
$D'_8 = 20$

Ainsi on est sûr de n'avoir qu'une solution pour les quatre valeurs les plus grandes de la suite de données ($D'_2$=56 est devenu plus grand que $D'_5$=53). On notera qu'on a choisi ici des coefficients de priorité décroissants mais on aurait pu les choisir croissants pour garder les données d'indice le plus grand en cas d'ambiguïtés. Ce point étant résolu, pour sélectionner les quatre plus grandes données, on procède comme expliqué ci-dessous.

Dans toute la suite de la description, tout élément affecté de l'indice j correspond à la $j^{ième}$ donnée de la suite.

Selon l'invention on associe à chaque donnée $D_j$ en binaire un mot comprenant des bits supplémentaires à savoir, dans l'ordre décroissant de poids de bit, un bit d'inhibition $I_j$, un bit de sélection $S_j$, les bits de la donnée $D_j$, et des bits de priorité $P_j$. Les bits $P_j$ représentent en binaire un coefficient de priorité valant n-j (ici 8-j).

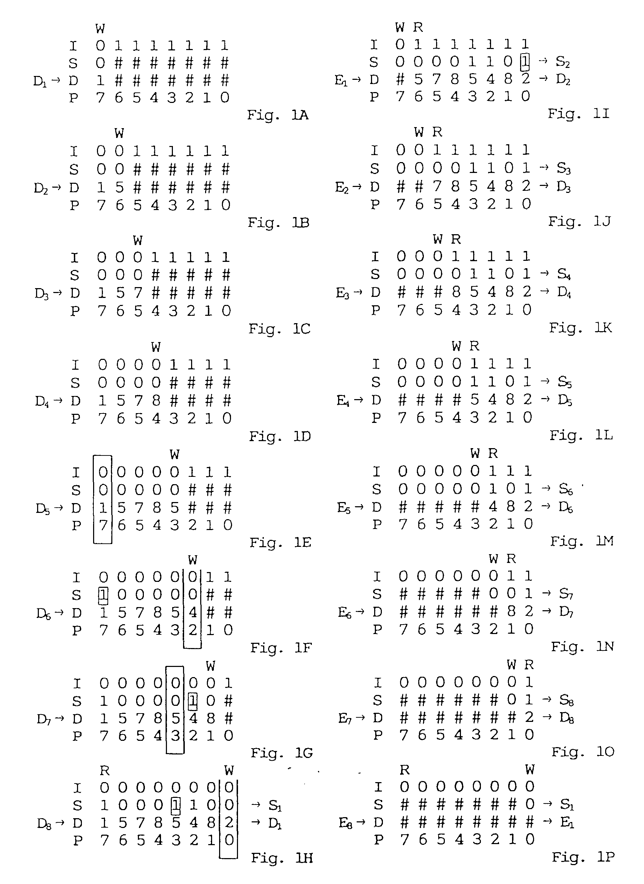

Chacun des mots est placé dans une mémoire, par exemple selon une colonne. Le contenu de la mémoire est illustré sous forme d'un tableau représenté aux figures 1A à 1P à différentes étapes de son remplissage, la première rangée représentant les états des bits I, la deuxième les états des bits S, la troisième les valeurs décimales des données D et la quatrième les valeurs décimales des coefficients de priorité P.

La figure 1A représente l'état de ce tableau dès l'arrivée de la première donnée $D_1$ d'une suite de huit données. le symbole "#" représente une valeur quelconque.

Dès l'arrivée de la première donnée $D_1$, les bits I des 8 colonnes sont mis à 1. La première colonne est sélectionnée pour écriture, une colonne sélectionnée pour écriture étant indiquée par la lettre W en haut de la colonne. La donnée $D_1$ y est écrite et en même temps les bits $I_1$ et $S_1$ sont mis à zéro.

A l'arrivée de chacune des trois données suivantes $D_2$ à $D_4$ dans les figures 1B à 1D, les trois colonnes suivantes sont successivement sélectionnées pour écriture, les données y sont respectivement écrites, et les bits I et S correspondants sont mis à zéro.

A la figure 1E, la cinquième donnée $D_5$ est écrite dans le tableau de la même manière à la cinquième colonne. A ce stade on détecte le plus petit mot dans les 8 colonnes, une détection étant représentée par une colonne encadrée. Il s'agit forcément de l'un des mots des 5 premières colonnes puisque leurs premiers bits I sont à 0 alors que les premiers bits I des mots des autres colonnes sont à 1. Dans l'exemple choisi, c'est le mot de la première colonne, on met à 1 son bit de sélection $S_1$ dès l'arrivée de la donnée suivante $D_6$ à la figure 1F. La mise à 1 est représentée par un 1 encadré. Du fait de la mise à 1 du bit $S_1$ du mot de la première colonne (le plus petit), celui-ci devient le plus grand parmi les cinq qui viennent d'être écrits et ne pourra plus être sélectionné comme le plus petit lors des comparaisons suivantes.

Les données $D_6$ à $D_8$ sont écrites lors des étapes illustrées dans les figures 1F à 1H de la même manière aux colonnes 6 à 8. On détecte successivement que les mots des colonnes 6, 5 et 8 sont les plus petits et on met à 1 leurs bits $S_6$, $S_5$ et $S_8$.

Après écriture de la dernière donnée $D_8$, on ne détecte plus de plus petit mot dans les colonnes jusqu'à l'arrivée de la quatrième donnée d'une nouvelle suite de données.

A la figure 1H, en même temps qu'on écrit la donnée $D_8$, on commence la séquence de lecture des données. Pendant l'écriture de la donnée $D_8$ et sept temps suivants, illustrés dans les figures 1I à 1O, on lit chacune des données dans l'ordre de leur arrivée avec le bit S correspondant. Une colonne sélectionnée pour lecture est indiquée par la lettre R en haut de la colonne. Ainsi, le bit S marque par 0 les quatre données les plus grandes et par 1 les autres. On peut ensuite, par exemple dans le cadre d'une application à de la compression d'image, annuler les données marquées par 1.

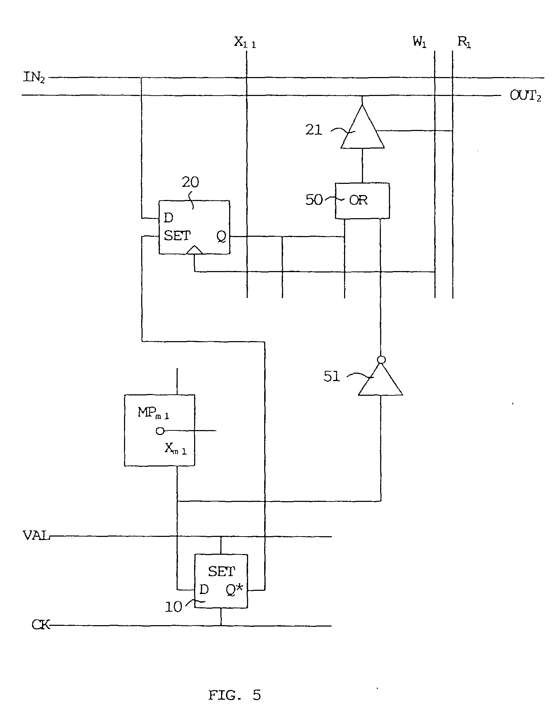

Un inconvénient peut résulter du fait que la première donnée $D_1$ soit la dernière donnée marquée par la mise à 1 du bit $S_1$. Dans ce cas, dans la figure 1H, on lira la donnée $D_1$ avec son bit $S_1$ qui n'aura pas encore été mis à 1, car ce bit est mis à 1 au temps suivant dans la figure 1I. Dans les applications où le circuit de la présente invention est employé, ce cas ne se présente jamais car les premières données sont les plus grandes, notamment quand ce circuit traite des données provenant d'une transformée cosinus. Toutefois, une solution à cet inconvénient sera proposé en figure 5.

On remarquera qu'on peut commencer à écrire de nouvelles données dans les colonnes dès l'instant où on lit la deuxième donnée $D_2$. Ainsi, par exemple à la figure 1I, on écrit la première donnée $E_1$ d'une suite de données $E_1$ à $E_8$ en même temps qu'on lit la donnée $D_2$ de la suite précédente et qu'on met à 1 le bit de sélection, ici $S_8$, du dernier plus petit mot. L'arrivée de la donnée $E_1$ force à 1 les bits I des 8 colonnes puis à 0 les bits I et S de la première colonne. Aux figures 1J à 1P, on écrit les données $E_2$ à $E_8$ comme cela a été décrit pour les données D. La donnée $E_1$ peut aussi arriver à n'importe quel instant ultérieur (voire après la lecture de la donnée $D_8$).

Ce procédé est facilement généralisable pour sélectionner les k données les plus grandes dans une suite de n données. Au lieu d'avoir huit mots et colonnes, on en aura n et la sélection des k plus petits de ces n mots est active après l'arrivée de la $(n-k)^{ième}$ donnée. Après l'arrivée de la $n^{ième}$ donnée, la sélection est inactive et on aura marqué les n-k plus petites colonnes en mettant à 1 leurs bits S. Ainsi il reste k colonnes marquées par un 0 dans leurs bits S correspondants, ce qui indique que les k plus grandes données y sont écrites. Pendant n temps suivants, les n données sont lues avec leurs bits S et on peut annuler celles marquées par un 1 dans les bits S.

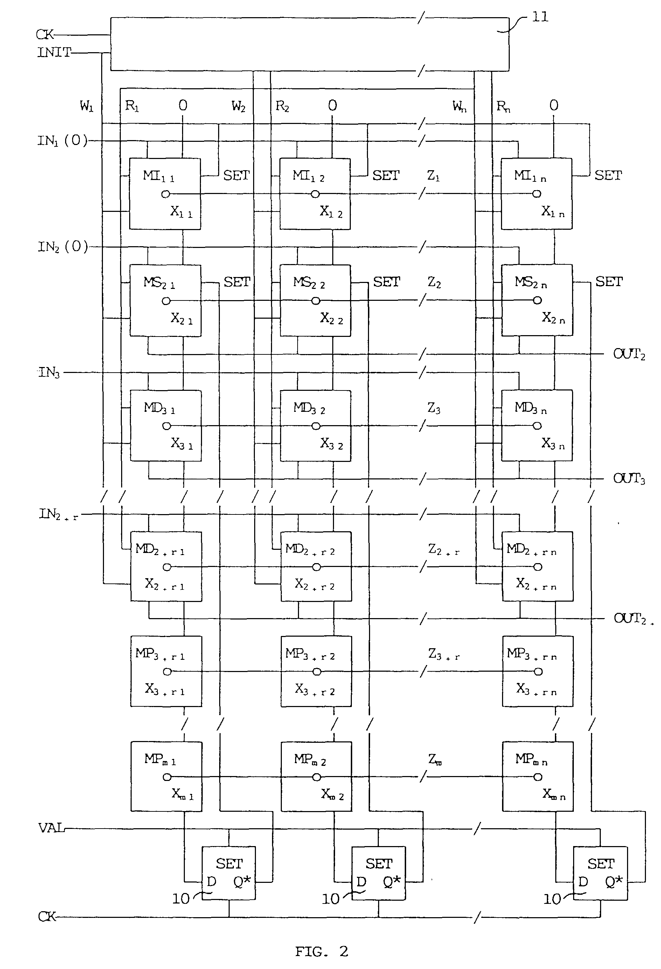

La figure 2 représente un mode de réalisation particulier d'un circuit mettant en oeuvre le procédé décrit précédemment. Ce circuit comprend une matrice de modules de mémorisation et de traitement d'un bit. Ainsi, dans le cas considéré précédemment où l'on veut traiter des suites de n données, cette matrice comprendra n colonnes, comme celles des tableaux des figures 1A à 1B. En outre, cette matrice comprend m rangées, le nombre m correspondant au nombre de bits d'une colonne des tableaux précédement décrits. La première rangée comprend des modules MI ($MI_{11}$... $MI_{1j}$... $MI_{1n}$) destinés aux bits d'inhibition I. La deuxième rangée comprend des modules MS ($MS_{21}$... $MS_{2j}$... $MS_{2n}$) destinés aux bits de sélection S. Les r rangées suivantes, r étant le nombre de bits d'une donnée à traiter, comprennent des modules MD ($MD_{31}$... $MD_{3j}$... $MD_{3n}$ à $MD_{2+r,1}$... $MD_{2+r,j}$... $MD_{2+r,n}$). Les p dernières rangées comprennent des modules de priorité MP ($MP_{3+r,1}$... $MP_{3+r,j}$... $MP_{3+r,n}$ à $MP_{m1}$... $MP_{mj}$... $MP_{mn}$) destinés à contenir sous forme binaire les mots de priorité désignés par la lettre P dans les tableaux des figures 1A à 1P (p représente le nombre de bits nécessaires au codage des nombres 0 à n-1).

Dans la suite de la description, i est un indice de rangée. Chacun des modules comprend une entrée de bit (sauf les modules MP), une sortie de bit (sauf les modules MI et MP), une entrée d'exclusion, une sortie d'exclusion $X_{ij}$, une entrée d'autorisation de lecture (sauf les modules MP) et une entrée d'autorisation d'écriture (sauf les modules MP). Les modules MI et MS comportent en plus une entrée SET de mise à 1. Les modules MP codent en binaire les coefficients de priorité de manière fixe.

Pour chaque module d'une même rangée i, l'entrée de bit est reliée à une ligne $IN_i$ d'un bus d'entrée, la sortie de bit est reliée à une ligne $OUT_i$ d'un bus de sortie et la sortie d'exclusion $X_{ij}$ est reliée à l'entrée d'exclusion du module de la rangée suivante i+1.

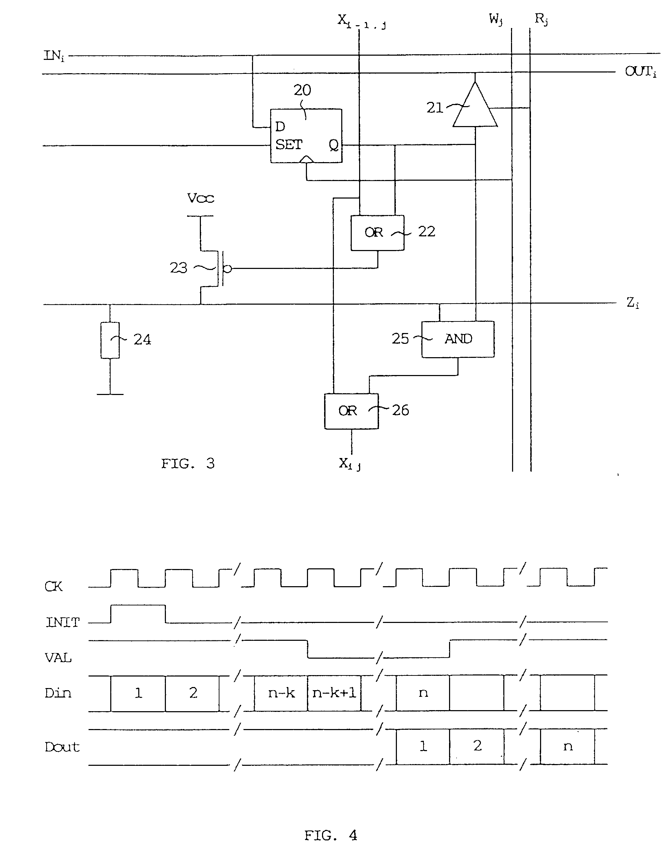

Tous les modules d'une rangée i sont aussi reliés à une ligne commune $Z_i$ dont le rôle sera compris lors de l'explication de la figure 3.

Pour chaque module d'une même colonne j, l'entrée d'autorisation d'écriture est reliée à une ligne $W_j$ d'un bus d'adresses d'écriture et l'entrée d'autorisation de lecture est reliée à une ligne $R_j$ d'un bus d'adresses de lecture. La première ligne de lecture $R_1$ est reliée à la dernière ligne d'écriture $W_n$, ce qui entraînera la lecture de la première colonne et l'écriture de la dernière simultanément. Les lignes W et R sont pilotées par un circuit d'adressage 11 de constitution classique, constitué par exemple d'un registre à décalage, commandé par une horloge CK et par un signal d'initialisation INIT appliqué aussi sur la première ligne d'écriture $W_1$.

Les entrées de bit des deux premières rangées sont reliées au niveau logique 0 (la masse). Les entrées d'exclusion des modules MI sont reliées au niveau logique 0. La sortie d'exclusion $X_{mj}$ de chacun des modules $MP_{mj}$ de la dernière rangée est reliée à l'entrée D d'une bascule 10.

Chacune des bascules 10 est du type D et comporte une sortie inversée Q* reliée à l'entrée SET de mise à 1 du module MS de la colonne correspondante, une entrée de validation reliée à une horloge CK et une entrée SET de mise à 1 reliée à une ligne de validation VAL commune à toutes les bascules 10.

Ainsi, si l'on considère une colonne de la figure 2, chaque module MI, MS, MD et MP d'une colonne correspond notamment à un point mémoire propre à mémoriser un bit du mot contenu dans la colonne correspondante des tableaux des figures 1A à 1P.

Lors des phases d'écriture de données, telles qu'illustrées dans les figures 1A à 1H, on écrit les données successives dans les modules MD de colonnes successives. Les opérations de comparaison sont actives pour les k dernières données écrites.

Chacun des modules MI, MS, MD et MP comprend, outre le point mémoire, une unité de traitement logique qui, en combinaison avec celle de tous les autres modules, effectue les opérations expliquées précédemment, à savoir des opérations de comparaison des valeurs des mots mémorisés dans les colonnes et des opérations de sélection de colonne. (Cette opération de sélection consistant à fixer le bit de sélection S du module MS de chacune des colonnes).

Mais avant d'aborder le fonctionnement d'un module, décrit ultérieurement à l'aide de la figure 3, on va éclaircir le fonctionnement de l'ensemble de ces modules dans une opération de comparaison et de sélection qui sera mieux comprise en reprenant l'exemple concret utilisé en relation avec les figures 1A à 1P. On a représenté ci-dessous le contenu des points mémoire des modules du circuit de la figure 2 correspondant à l'état de l'étape de la figure 1G.

|      | 1 | 2 | 3 | 4 | 5 | 6 | 7 | 8 |
|------|---|---|---|---|---|---|---|---|
| MI1  | 0 | 0 | 0 | 0 | 0 | 0 | 0 | 1 |
| MS2  | 1 | 0 | 0 | 0 | 0 | 1 | 0 | # |
| MD3  | 0 | 0 | 0 | 1 | 0 | 0 | 1 | # |
| MD4  | 0 | 1 | 1 | 0 | 1 | 0 | 0 | # |
| MD5  | 0 | 0 | 1 | 0 | 0 | 1 | 0 | # |
| MD6  | 1 | 1 | 1 | 0 | 1 | 0 | 0 | # |
| MP7  | 1 | 1 | 1 | 1 | 0 | 0 | 0 | 0 |
| MP8  | 1 | 1 | 0 | 0 | 1 | 1 | 0 | 0 |
| MP9  | 1 | 0 | 1 | 0 | 1 | 0 | 1 | 0 |

On supposera, pour simplifier les explications, qu'on analyse séquentiellement les modules rangée par rangée en partant de la première. Pour cela, on regarde d'abord les modules dans la première rangée. Les modules contenant un 1 (ci-dessus celui de la colonne 8) correspondront forcément aux mots les plus grands et chacun de ces modules fournira au module inférieur par sa sortie d'exclusion un bit d'exclusion (représenté ci-dessus par un chiffre souligné) qui se propagera vers le bas de module en module pour exclure la colonne correspondante des analyses suivantes. On procède ainsi pour les rangées suivantes et l'on pourra donc identifier le mot pour lequel aucun bit d'exclusion n'apparaît dans la rangée la plus basse comme le plus petit. A la suite de cette identification on marquera d'un 1 le bit de sélection de ce mot.

Bien entendu, ce circuit doit tenir compte de quelques combinaisons logiques supplémentaires à savoir qu'aucun bit d'exclusion ne doit être émis dans le cas où, pour toutes les colonnes non précédemment exclues, tous les modules d'une même rangée contiennent un 1 (par exemple ci-dessus les modules $MD_{42}$, $MD_{43}$ et $MD_{45}$ puis les modules $MD_{62}$ et $MD_{65}$ puis le module $MP_{85}$ et finalement le module $MP_{95}$).

Toutes ces opérations sont effectuées grâce à la contribution de chacune des unités de traitement logique contenues dans les modules.

La figure 3 représente un des modules sous la forme d'un schéma logique.

Un point mémoire constitué d'une bascule 20 du type D comprend une entrée D de bit reliée à une des lignes $In_i$ ; une entrée de validation reliée à une des lignes d'écriture $W_j$ ; une sortie Q reliée à une des lignes

$OUT_i$ par l'intermédiaire d'une porte trois états 21 activée par son entrée de commande reliée à une des lignes de lecture $R_j$ ; et une entrée SET de mise à 1 dans le cas des modules MI et MS. Les modules MP ne comportent pas de bascule et les fils qui correspondraient aux sorties des bascules sont reliées soit à la masse (0 logique), soit à la tension d'alimentation Vcc (1 logique) pour former en binaire les coefficients de priorité n-j.

Une porte OU (OR) 22 reçoit la sortie Q de la bascule 20 et la sortie d'exclusion $X_{i-1,j}$ du module de la ligne précédente. La sortie de la porte OU 22 alimente la grille d'un transistor MOS à canal P 23 dont la source est reliée à la tension d'alimentation Vcc et dont le drain est relié à la ligne $Z_i$. Un moyen résistif 24 (un seul par ligne) relie la ligne $Z_i$ à la masse. L'ensemble des transistors MOS 23 d'une même rangée et le moyen résistif 24 constituent une porte NON ET. Cette porte NON ET a pour sortie la ligne $Z_i$ et chacune de ses entrées est reliée aux sorties des portes OU 22 de la même rangée. On peut considérer la porte NON ET comme un détecteur de zéro qui fournit à sa sortie un 1 quand au moins une de ses entrées est à 0. Une porte ET (AND) 25 est connectée en entrée à la sortie Q de la bascule 20 et à la ligne $Z_i$. Une porte OU (OR) 26 reçoit la sortie de la porte ET 25 et la sortie d'exclusion $X_{i-1,j}$ du module précédent. la sortie de la porte OU 26 constitue la sortie d'exclusion $X_{ij}$.

Un module fonctionne de la manière suivante.

Un 1 présent sur son entrée d'exclusion ($X_{i-1,j}=1$) indique que la colonne est à exclure des analyses, c'est-à-dire qu'un bit à 1 a été détecté dans au moins un des modules de la colonne dans les rangées précédentes. Ce 1 est présent sur l'une des entrées de la porte OU 26 et est transmis à la sortie de cette porte, qui constitue la sortie d'exclusion $X_{ij}$. Ainsi, chaque module satisfait à la fonction de transmission directe d'un bit d'exclusion produit par un module antérieur de la même colonne.

Si un 0 est présent sur l'entrée d'exclusion ($X_{i-j,j}=0$), ceci signifie que la colonne à laquelle appartient le module considéré n'a pas encore été identifiée comme comprenant un mot plus grand que celui ou ceux contenus dans au moins une autre colonne. Le contenu Q de la bascule 20 est présent sur l'une des entrées de la porte ET 25 et est transmis à la sortie de cette porte, et aussi à la sortie $X_{ij}$ à travers la porte OU 26, seulement si la ligne $Z_i$ reliée à l'autre entrée de la porte ET 25 est à 1. Ceci veut dire que si le contenu Q de la bascule 20 est à 1, on détecte pour la première fois que la colonne à laquelle appartient le module considéré est à exclure des analyses, si toutes les autres bascules des modules de la même rangée ne recevant pas un bit d'exclusion ne sont pas également à 1.

La ligne $Z_i$ est forcée à 1 par l'un quelconque des modules d'une même rangée dont le transistor MOS 23 est conducteur, c'est-à-dire dont la porte OU 22 a sa sortie à 0. Ceci se produit seulement si l'entrée d'exclusion et le contenu de la bascule sont à 0, ce qui signifie que la colonne à laquelle appartient le module considéré contient forcément un des plus petits mots.

La ligne $Z_i$ est forcée à 0 par le moyen résistif 24 seulement si tous les transistors MOS 23 des modules d'une même rangée sont bloqués. Ceci se produit quand chacun des modules de la rangée a son entrée d'exclusion à 1 ou le contenu de sa bascule 20 à 1. Ceci se présente dans le cas où tous les modules de la rangée et dans des colonnes non exclues contiennent un 1 dans leur bascule 20. Dans ce cas, toutes les sorties des portes ET 25 des modules de la rangée sont à 0 et ce 0 est transmis aux sorties d'exclusion de tous les modules de la rangée se trouvant dans des colonnes non exclues.

Sachant que la ligne $Z_i$ d'une rangée i est à 0 seulement si chacun des modules de la rangée i a son entrée d'exclusion à 1 ou le contenu de sa bascule 20 à 1, on peut résumer les valeurs que prend la sortie d'exclusion $X_{ij}$ d'un module se trouvant à la rangée i et à la colonne j par le tableau suivant :

| $Z_i$ | $X_{i-1,j}$ | $X_{ij}$ |
|---|---|---|
| # | 1 | 1 |
| 0 | 0 | 0 |
| 1 | 0 | Q |

Les trois colonnes représentent respectivement les valeurs que prennent la ligne $Z_i$, la sortie d'exclusion du module de la rangée précédente i-1 et de la même colonne j, et la sortie d'exclusion $X_{ij}$ du module considéré. Le symbole "#" représente indifféremment 0 ou 1 et Q désigne le contenu de la bascule 20 du module considéré.

Outre ces fonctions de calcul, chaque module effectue les opérations d'écriture et de lecture suivantes.

Un 1 présent sur la ligne $W_j$ qui est reliée à l'entrée de validation de la bascule 20 permet de charger dans la bascule le bit présent à ce moment là sur la ligne $IN_i$ reliée à l'entrée de bit D de la bascule. Un 1 présent sur la ligne de lecture $R_j$ qui est reliée à l'entrée de commande de la porte trois états 21 permet la transmission du contenu Q de la bascule sur la ligne $OUT_i$ reliée à la sortie de la porte trois états 21.

On constate ici que de par leur constitution, tous les modules fonctionnent en continu et simultanément pour rechercher comme on l'a expliqué précédemment la colonne contenant le plus petit mot, leurs sorties d'exclusion oscillant puis se stabilisant à des valeurs fixes à un instant ultérieur à l'arrivée d'une donnée et antérieur à l'arrivée de la donnée suivante.

Certains points qui restent à éclaircir, notamment la façon dont sont séquencées les opérations du circuit de sélection de la figure 2, seront expliqués dans la suite.

La figure 4 représente un chronogramme où CK désigne le signal d'horloge ; INIT le signal d'initialisation appliqué à la ligne $W_1$ et en entrée du circuit d'adressage 11 ; VAL le signal de validation appliqué à la ligne de validation ; Din les instants d'apparition de chacune des données $D_j$ sur les lignes $IN_i$ du bus d'entrée ; et Dout les instants d'apparition de chacune des données $D_j$ à la sortie du circuit sur les lignes $OUT_i$ du bus de sortie.

Initialement, le signal INIT est à 0 et le signal VAL est à 1, les signaux Din et Dout sont quelconques. Dès l'arrivée de la première donnée $D_1$ d'une suite de données, le signal INIT passe à l'état haut pendant une période d'horloge en autorisant l'écriture de la donnée $D_1$ dans les modules MD de la première colonne ; les bascules des modules MI de la première rangée sont mises à 1 et on initialise le circuit d'adressage 11. Au prochain front montant du signal d'horloge correspondant à l'arrivée de la donnée suivante $D_2$, le circuit d'adressage présente un 1 sur la ligne $W_2$ pendant une période d'horloge, ce qui autorise l'écriture de la donnée $D_2$ dans les modules MD de la deuxième colonne et ainsi de suite jusqu'à l'écriture des n données successivement dans chacun des ensembles de modules $MD_{i1}$ à $MD_{in}$. Dès l'arrivée d'une des données, tous les modules de la matrice se mettent à calculer la colonne contenant le plus petit mot et un 0 apparaît à la sortie d'exclusion du dernier module de cette colonne.

Entre temps, dès l'écriture de la (n-k)$^{ième}$ donnée, le signal VAL passe à l'état bas jusqu'à l'écriture de la n$^{ème}$ donnée. Pendant cet intervalle de temps, les bascules 10 sont actives, c'est-à-dire que leurs sorties Q* ne sont plus forcées à 0 par le signal VAL et qu'elles prennent en compte les bits présents sur leurs entrées ; notamment au prochain front montant de l'horloge (dès l'arrivée de la donnée suivante), la bascule 10 de la colonne contenant le mot le plus petit transmet à sa sortie Q* un 1 mettant le module MS correspondant à 1.

Dès l'écriture de la dernière donnée dans les modules MD de la dernière colonne, le circuit d'adressage 11 autorise le transfert de la première donnée $D_1$ ainsi que du bit de sélection $S_1$ stockés respectivement dans les modules $MD_{31}$ à $MD_{2+r1}$ et $MS_1$ sur le bus de sortie de données, et ainsi de suite jusqu'à la lecture des modules MD et MS de la dernière colonne.

La figure 5 illustre une modification simple du circuit de la présente invention, permettant de pallier l'inconvénient précédemment mentionné selon lequel, lorsque la première donnée $D_1$ est la dernière donnée marquée, le bit de marquage $S_1$ de cette donnée $D_1$ n'est pas encore forcé à 1 alors que ce bit de marquage et la donnée $D_1$ sont lues. A la figure 5 on a représenté partiellement le circuit d'un module $MS_{21}$ modifié, le dernier module $MP_{m1}$ et la bascule 10 de mise à 1 du module $MS_{21}$.

Entre la porte trois états 21 et la sortie de la bascule 20 du module $MS_{21}$, on a inséré une porte OU 50 recevant sur une entrée la sortie de la bascule 20, et sur une autre entrée le bit d'exclusion $X_{m1}$ provenant du module $MP_{m1}$ par l'intermédiaire d'un inverseur 51. Le fonctionnement sera mieux compris à l'aide des figures 1H et 4.

Dès que la dernière donnée $D_8$ est écrite, la comparaison débute et, peu de temps après, un bit d'exclusion $X_{m1}$ égal à 0 apparaîtra à la sortie du module $MP_{m1}$ indiquant que la donnée $D_1$ doit être marquée. La mise à 1 de la bascule de marquage 20 n'aura lieu qu'au prochain front montant de l'horloge CK quand le bit d'exclusion $X_{m1}$ sera transféré à la sortie inversée Q* de la bascule 10. En même temps on effectue la lecture de la donnée $D_1$ et du module $MS_{21}$. La ligne de lecture $R_1$ est mise à 1 et la porte 21 transmet sur la ligne $OUT_2$ la sortie de la porte OU 50. Comme dans ce cas la bascule 20 n'est pas encore à 1, la sortie de la porte OU 50, et donc la ligne $OUT_2$, s'établira à 1 quand le bit $X_{m1}$ s'établira à 0. Ainsi, le bit de marquage $S_1$ présenté sur la ligne $OUT_2$ s'établit un certain temps après l'établissement des bits de la donnée $D_1$ sur les autres lignes OUT, mais, comme en général ces bits sont pris en compte par le circuit qui les utilise au prochain front descendant de l'horloge CK, ce retard, étant inférieur à la demi-période d'horloge, n'induira pas d'erreur.

Un circuit facile à réaliser par l'homme du métier peut être placé après le circuit de la figure 2 pour annuler les données marquées par un 1 dans leurs bits de sélection S correspondants.

On notera qu'on peut commencer à écrire la première donnée d'une nouvelle suite de données alors qu'on est en train de lire les données d'une ancienne suite de données.

On notera aussi que le circuit du mode de réalisation de l'invention décrit en relation avec la figure 2 est un circuit du type systolique où chacun des modules constitue une systole. Ce genre de circuit est d'une intégration facile car son routage est simplifié.

De plus, on peut montrer que la durée de sélection de la plus petite des n colonnes est proportionnelle à :

$$T_Z + (m-1)T_M,$$

où $T_Z$ désigne le temps d'établissement d'un bit sur une ligne Z, m désigne le nombre de modules dans une colonne et $T_M$ désigne le temps de calcul d'un module. Cette durée est particulièrement brève.

L'invention a été décrite dans le cadre d'un traitement d'image, mais elle s'applique partout où on a besoin de sélectionner les k plus grandes ou plus petites données dans un ensemble de données.

Le circuit logique représenté à la figure 3 est donné à titre d'exemple. Bien entendu, on peut obtenir les mêmes fonctions avec un grand nombre de circuits logiques différents. Les fonctions de ces circuits peuvent aussi être réalisées avec un microprocesseur convenablement programmé associé à des mémoires.

Les modules de priorité MP ont été décrits comme ayant un contenu fixe, mais celui-ci peut tout aussi bien être modifiable comme le contenu des autres modules, pour obtenir des ordres de priorité variables.

## Revendications

1. Procédé de sélection des k données de plus grande valeur dans une suite de n données arrivant séquentiellement sous forme de signaux logiques binaires, caractérisé en ce qu'il comprend les étapes suivantes :

a) écrire séquentiellement chacune des données dans l'une de n mémoires adaptées à recevoir chacune un mot comprenant dans l'ordre des poids de bit décroissant :

un premier bit d'inhibition ($I_j$),
un deuxième bit de sélection ($S_j$),
des troisièmes bits ($D_j$) de la donnée,
des quatrièmes bits (P) correspondant à un nombre représentatif du rang d'arrivée de la donnée ;

b) mettre à 1 les premiers bits ($I_j$) des n mots lors de l'arrivée du premier des signaux correspondant à la suite de données ;

c) lors de l'écriture de chacune des données ($D_j$), mettre à zéro les premier ($I_j$) et deuxième ($S_j$) bits du mot correspondant ;

d) entre les arrivées des signaux correspondant à la (n-k)$^{ème}$ donnée et à la n$^{ème}$ donnée, détecter le plus petit des mots contenus dans les mémoires et mettre à 1 son deuxième bit ($S_j$) ; et

e) dès l'arrivée des signaux correspondant à la n$^{ème}$ donnée, lire séquentiellement les données mémorisées et traiter différement celles dont le mot présente le deuxième bit ($S_j$) à 1 et celles dont ce bit est à 0.

2. Procédé selon la revendication 1, caractérisé en ce qu'à l'étape e) les données sont lues selon l'ordre de leur écriture à l'étape a).

3. Circuit de sélection des k données de plus grande valeur dans une suite de n données présentées séquentiellement sur un bus d'entrée sous forme de signaux logiques binaires, caractérisé en ce qu'il comprend :

- une matrice de points mémoire (20) de n colonnes et m rangées, chaque colonne étant affectée à un mot correspondant à l'une des données et comprenant dans l'ordre des numéros de rangée croissants et des poids de bit décroissants :

. un premier point mémoire d'inhibition (MI) mis à un par un signal d'initialisation (INIT) et mis à zéro par l'arrivée de la donnée,

. un deuxième point mémoire de sélection (MS) relié à une ligne d'un bus de sortie, mis à zéro par l'arrivée de la donnée,

. des troisièmes points mémoire (MD) reliés aux lignes du bus d'entrée de données et d'un bus de sortie de données, pour recevoir et stocker la donnée, et

. des quatrièmes points mémoire (MP) contenant un nombre représentatif du rang d'arrivée de la donnée ;

- un premier circuit pour adresser chacune des colonnes au rythme d'arrivée des données et y écrire la donnée présente sur les lignes du bus d'entrée ;
- un deuxième circuit actif seulement entre l'arrivée de la (n-k)$^{ème}$ donnée et l'arrivée de la n$^{ème}$ donnée pour détecter le mot de plus petite valeur et mettre son deuxième point mémoire à 1 dès l'arrivée de la donnée suivante ; et
- un troisième circuit pour adresser chacune des colonnes au rythme d'arrivée des données et écrire les bits contenus dans les deuxième et troisièmes points mémoire sur les lignes du bus de sortie de données dès l'écriture de la n$^{ème}$ donnée.

4. Circuit selon la revendication 3, caractérisé en ce que le deuxième circuit est constitué de modules, chacun étant associé à un point mémoire et comprenant :

- une liaison à la sortie Q du point mémoire associé,
- une sortie d'exclusion $X_{ij}$ qui, si la rangée courante i est la dernière (m), est reliée à une entrée de mise à 1 du deuxième point mémoire de la colonne courante j,
- une sortie intermédiaire,
- une entrée d'exclusion reliée, ou bien à la sortie d'exclusion $X_{i-1,j}$ du module de la colonne courante j et de la rangée précédente i-1, ou bien à 0 si la rangée courante est la première,
- une entrée de détection reliée à la sortie $Z_i$ d'un moyen logique de détection (23, 24) commun à tous les modules de la rangée courante j et recevant en entrée les sorties intermédiaires de ces modules ;

la sortie $X_{ij}$ prenant les valeurs résumées dans le tableau suivant où le symbole "#" désigne indifféremment 0 ou 1 :

| $Z_i$ | $X_{i-1,j}$ | $X_{ij}$ |
|---|---|---|
| # | 1 | 1 |
| 0 | 0 | 0 |
| 1 | 0 | Q |

la sortie intermédiaire prenant la valeur 1 si la sortie $X_{i-1,j}$ est à 1 et/ou si la sortie Q est à 1.

**5.** Circuit selon la revendication 4, caractérisé en ce que le moyen logique de détection fournit la valeur 0 à sa sortie $Z_i$ seulement quand toutes les sorties intermédiaires des modules de la rangée courante j sont à 1.

**6.** Circuit selon la revendication 3, caractérisé en ce que les circuits pour adresser chacune des colonnes sont constitués d'un registre à décalage.

**7.** Circuit selon la revendication 3, caractérisé en ce que les deuxièmes points mémoire sont autorisés à être mis à 1 par un signal de validation actif entre les arrivées de la $(n-k)^{ième}$ donnée et de la $n^{ième}$ donnée.

**Patentansprüche**

**1.** Verfahren zum Auswählen der k Daten von größtem Betrag in einer Folge von sequentiell in Form binärer Digitalsignale ankommenden n Daten, dadurch gekennzeichnet, daß das Verfahren die folgenden Schritte umfaßt:

a) jedes der Daten wird sequentiell in einen von n Speichern eingeschrieben, deren jeder jeweils ein Datenwort aufnehmen kann, welches in der Reihenfolge abnehmender Bit-Wertigkeit enthält:

- ein erstes Inhibitions- bzw. Sperr-Bit ($I_j$),

- ein zweites Selektions-Bit ($S_j$),

- dritte Daten-Bits ($_{Dj}$) des betreffenden Datums,

- vierte Bits (P), welche einer den Eintreffrang des Datums wiedergebenden Zahl entsprechen,

b) beim Eintreffen des ersten der der Datenfolge entsprechenden Signale werden die ersten Bits ($I_j$) der n Datenworte (auf Eins) gesetzt,

c) beim Einschreiben jedes der Daten ($D_j$) werden die ersten ($I_j$) und die zweiten ($S_j$) Bits des entsprechenden Datenworts (auf Null) rückgestellt,

d) zwischen dem Ankommen der dem (n-k)-ten Datum und dem n-ten Datum entsprechenden Signale wird das in den Speichern enthaltene kleinste Datenwort festgestellt und sein zweites Bit ($S_j$) (auf Eins) gesetzt, sowie

e) beim Eintreffen der dem n-ten Datum entsprechenden Signale werden sequentiell die gespeicherten Daten gelesen und diejenigen, in deren Datenwort das zweite Bit ($S_j$) Eins beträgt, in anderer Weise behandelt als diejenigen, bei denen dieses Bit den Wert Null besitzt.

**2.** Verfahren nach Anspruch 1, dadurch gekennzeichnet, daß in der Verfahrensstufe e) die Daten in der Reihenfolge ihres Einschreibens in der Verfahrensstufe a) gelesen werden.

**3.** Schaltung zum Auswählen der k Daten mit dem größten Betrag in einer Folge von n Daten, die sequentiell auf einem Eingangs-Bus in Form binärer Digitalsignale ankommen, dadurch gekennzeichnet, daß die Schaltung umfaßt:

- eine Punktspeichermatrix (20) mit n Spalten und m Zeilen, wobei jeweils jede Spalte einem einem der Daten entsprechenden Datenwort zugewiesen ist und in der Reihenfolge zunehmender Zeilenzahlen und abnehmender Bit-Wertigkeiten umfaßt:

. einen ersten Inhibitions- bzw. Sperr-Speicherpunkt (MI), der durch ein Initialisiersignal (INIT) auf Eins gesetzt und beim Ankommen des Datums auf Null rückgestellt wird,

. einen zweiten Selektions-Speicherpunkt (MS), der mit einer Leitung eines Ausgangs-Bus verbunden ist und beim Ankommen des Datums auf Null gestellt wird,

. dritte Speicherpunkte (MD), welche mit den Leitungen des Dateneingangs-Bus und den Leitungen eines Datenausgangs-Bus verbunden sind, zum Empfang und zum Speichern des Datums, sowie

. vierte Speicherpunkte (MP), welche eine den Eintreffrang des Datums wiedergebende Zahl enthalten,

- eine erste Schaltung zur Adressierung jeder der Spalten im Rhythmus des Eintreffens der Daten und zum Einschreiben des jeweils auf den Leitungen des Eingangs-Bus anliegenden Datums in die Kolonne,

- eine zweite Schaltung, die nur zwischen dem Ankommen des (n-k)-ten Datums und dem Ankommen des n-ten Datums aktiv ist, um das Wort mit dem kleinsten Betrag festzustellen und seinen zweiten Speicherpunkt beim Eintreffen des nächsten Datums auf Eins zu setzen, sowie

- eine dritte Schaltung zum Adressieren jeder der Spalten im Rhythmus des Eintreffens der Daten und zum Einschreiben der Bits, die in den zweiten und dritten Speicherpunkten auf den Leitungen des Ausgangsdaten-Bus beim Schreiben des n-ten Datums enthalten sind.

4. Schaltung nach Anspruch 3,
dadurch gekennzeichnet, daß die zweite Schaltung aus Modulen besteht, deren jeder jeweils einem Speicherpunkt zugeordnet ist und umfaßt:

- eine Verbindung mit dem Q-Ausgang des zugehörigen Speicherpunktes,

- einen Exklusionsausgang ($X_{ij}$), der, wenn die laufende Zeile (i) die letzte (m) ist, mit einem Setz-Eingang des zweiten Speicherpunkts der laufenden Spalte (j) verbunden wird,

- einen Zwischenausgang,

- einen Exklusionsausgang, der entweder mit dem Exklusionsausgang ($X_{i-1,j}$) des Moduls der laufenden Spalte (j) und der vorhergehenden Zeile (i-j), oder mit "0" verbunden ist, wenn die laufende Zeile die erste ist,

- einen Detektionseingang, der mit dem Ausgang ($Z_i$) einer sämtlichen Modulen der laufenden Zeile (j) gemeinsamen Nachweis- oder Detektionslogik (23, 24) verbunden ist, welche am Eingang die Zwischenausgänge dieser Module zugeführt erhält,

wobei der Ausgang ($X_{ij}$) die in der folgenden Tabelle zusammengestellten Werte annimmt, wobei das Symbol "#" indifferent 0 oder 1 bedeutet:

| $Z_i$ | $X_{i-1,j}$ | $X_{ij}$ |
|---|---|---|
| # | 1 | 1 |
| 0 | 0 | 0 |
| 1 | 0 | Q |

wobei der Zwischenausgang den Wert 1 annimmt, wenn der Ausgang ($X_{i-1,j}$) "1" ist und/oder wenn der Ausgang (Q) den Betrag "1" besitzt.

5. Schaltung nach Anspruch 4,
dadurch gekennzeichnet, daß die Detektionslogikschaltung an ihrem Ausgang ($Z_i$) den Wert 0 nur liefert, wenn sämtliche Zwischenausgänge der Module der laufenden Zeile (j) den Wert "1" besitzen.

6. Schaltung nach Anspruch 3,
dadurch gekennzeichnet, daß die Schaltungen zur Adressierung jeder der Spalten durch ein Schieberegister gebildet werden.

7. Schaltung nach Anspruch 3,
dadurch gekennzeichnet, daß die zweiten Speicherpunkte zwischen dem Eintreffen des (n-k)-ten Datums und des n-ten Datums durch ein aktives Validier- bzw. Betätigungssignal zur Stellung auf Eins autorisiert werden.

**Claims**

1. A method for sorting the k greatest data in a sequence of n data sequentially incoming in the form of binary logic signals, characterized in that it comprises the following steps:

    a) sequentially writing each datum in one of n memories adapted to each receive one word comprising in the order of decreasing weight:

        a first inhibition bit ($I_j$),
        a second selection bit ($S_j$),
        third data bits ($D_j$),
        fourth bits (P) corresponding to a number representative of the rank of the incoming datum;

    b) setting the first bits ($I_j$) of the n words when the first signal of the data sequence occurs;
    c) while writing each datum ($D_j$), resetting the first ($I_j$) and second ($S_j$) bits of the corresponding word;
    d) between the arrivals of the signals corresponding to the $(n-k)^{th}$ datum and $n^{th}$ datum, detecting the smallest word stored in the memories and setting its second bit ($S_j$); and
    e) as soon as signals corresponding to the $n^{th}$ datum have arrived, sequentially reading the stored data and differently processing the data whose word has its second bit ($S_j$) to "1" from those whose bit is reset.

2. A method according to claim 1, characterized in that, during step e), data are read in the order in which they have been written during step a).

3. A circuit for sorting the k greatest data in a sequence of n data sequentially arriving on an input bus as binary logic signals, characterized in that it comprises:

    - a memory point matrix (20) of n columns and m rows, each column being assigned to a word corresponding to one of the data and comprising in the order of increasing row numbers and decreasing bit weights:

- a first inhibition memory point (MI) set by an initialization signal (INIT) and reset by the incoming datum,
- a second selection memory point (MS) connected to an output bus line, reset by the incoming datum,
- third memory points (MD) connected to the lines of a data input bus and a data output bus, for receiving and storing the datum, and
- fourth memory points (MP) containing a number representative of the rank of the datum incoming;

- a first circuit for addressing each of the columns according to the input rate of the data and storing therein the datum present on the lines of the input bus;

- a second circuit active only between the arrival of the $(n-k)^{th}$ datum and the arrival of the $n^{th}$ datum for detecting the smallest word and setting its second memory point as soon the next datum has arrived; and

- a third circuit for addressing each of the columns in accordance with the data rate and writing the bits contained in the second and third memory points on the lines of the data output bus as soon as the $n^{th}$ datum is written.

4. A circuit according to claim 3, characterized in that the second circuit comprises modules, each being associated to a memory point and comprising:

- a connection with the output Q of the associated memory point,
- an exclusion output $X_{ij}$ which, if the current row i is the last (m), is connected to a set input of the second memory point of the current column j,
- an intermediate output,
- an exclusion input connected, either to the exclusion output $X_{i-1,j}$ of the module of the current column j and of the preceding row i-j, or to "0" if the current row is the first,
- a detection input connected to the output $Z_i$ of a detection logic means (23, 24) common to all modules of the current row j and receiving at the input the intermediate outputs of said modules;

said output $X_{ij}$ taking the values summed up in the following table where symbol "#" indifferently designates 0 or 1:

| $Z_i$ | $X_{i-1,j}$ | $X_{ij}$ |
|-------|-------------|----------|
| # | 1 | 1 |
| 0 | 0 | 0 |

(continued)

| $Z_i$ | $X_{i-1,j}$ | $X_{ij}$ |
|-------|-------------|----------|
| 1 | 0 | Q |

the intermediate output taking value 1 if the output $X_{i-1,j}$ and/or if output Q is "1".

5. A circuit according to claim 4, characterized in that the logic detection means provides the value 0 at its output $Z_i$ only when all the intermediate outputs of the modules of the current row j are set to "1".

6. A circuit according to claim 3, characterized in that the circuits for addressing each column are constituted by a shift register.

7. A circuit according to claim 3, characterized in that the second memory points are authorized to be set by an active enable signal between the arrivals of the $(n-k)^{th}$ datum and $n^{th}$ datum.

```
          W
    I   0 1 1 1 1 1 1
    S   0 # # # # # #
D1→ D   1 # # # # # #
    P   7 6 5 4 3 2 1 0
```
Fig. 1A

```
          W
    I   0 0 1 1 1 1 1
    S   0 0 # # # # #
D2→ D   1 5 # # # # #
    P   7 6 5 4 3 2 1 0
```
Fig. 1B

```
            W
    I   0 0 0 1 1 1 1
    S   0 0 0 # # # #
D3→ D   1 5 7 # # # #
    P   7 6 5 4 3 2 1 0
```
Fig. 1C

```
              W
    I   0 0 0 0 1 1 1
    S   0 0 0 0 # # #
D4→ D   1 5 7 8 # # #
    P   7 6 5 4 3 2 1 0
```
Fig. 1D

```
                W
    I  |0| 0 0 0 0 1 1 1
    S  |0| 0 0 0 0 # # #
D5→ D  |1| 5 7 8 5 # # #
    P  |7| 6 5 4 3 2 1 0
```
Fig. 1E

```
                  W
    I   0 0 0 0 0 |0| 1 1
    S  |1| 0 0 0 0 |0| # #
D6→ D   1 5 7 8 5 |4| # #
    P   7 6 5 4 3 |2| 1 0
```
Fig. 1F

```
                    W
    I   0 0 0 0 |0| 0 0 1
    S   1 0 0 0 |0| |1| 0 #
D7→ D   1 5 7 8 |5| 4 8 #
    P   7 6 5 4 |3| 2 1 0
```
Fig. 1G

```
          R                 W
    I   0 0 0 0 0 0 0 |0|
    S   1 0 0 0 |1| 1 0 |0|  → S1
D8→ D   1 5 7 8 5 4 8 |2|  → D1
    P   7 6 5 4 3 2 1 |0|
```
Fig. 1H

```
          W R
    I   0 1 1 1 1 1 1
    S   0 0 0 0 1 1 0 |1|  → S2
E1→ D   # 5 7 8 5 4 8 2   → D2
    P   7 6 5 4 3 2 1 0
```
Fig. 1I

```
          W R
    I   0 0 1 1 1 1 1
    S   0 0 0 0 1 1 0 1  → S3
E2→ D   # # 7 8 5 4 8 2  → D3
    P   7 6 5 4 3 2 1 0
```
Fig. 1J

```
            W R
    I   0 0 0 1 1 1 1
    S   0 0 0 0 1 1 0 1  → S4
E3→ D   # # # 8 5 4 8 2  → D4
    P   7 6 5 4 3 2 1 0
```
Fig. 1K

```
              W R
    I   0 0 0 0 1 1 1
    S   0 0 0 0 1 1 0 1  → S5
E4→ D   # # # # 5 4 8 2  → D5
    P   7 6 5 4 3 2 1 0
```
Fig. 1L

```
                W R
    I   0 0 0 0 0 1 1 1
    S   0 0 0 0 0 1 0 1  → S6
E5→ D   # # # # # 4 8 2  → D6
    P   7 6 5 4 3 2 1 0
```
Fig. 1M

```
                  W R
    I   0 0 0 0 0 0 1 1
    S   # # # # 0 0 1   → S7
E6→ D   # # # # # # 8 2  → D7
    P   7 6 5 4 3 2 1 0
```
Fig. 1N

```
                    W R
    I   0 0 0 0 0 0 0 1
    S   # # # # # 0 1   → S8
E7→ D   # # # # # # # 2  → D8
    P   7 6 5 4 3 2 1 0
```
Fig. 1O

```
          R                 W
    I   0 0 0 0 0 0 0 0
    S   # # # # # # # 0  → S1
E8→ D   # # # # # # #    → E1
    P   7 6 5 4 3 2 1 0
```
Fig. 1P

FIG. 2

FIG. 3

FIG. 4

FIG. 5